# EUROPEAN PATENT SPECIFICATION

(11) **EP 1 352 098 B1**
(45) Date of publication and mention of the grant of the patent: **30.06.2004**
(21) Application number: 01999680.0
(22) Date of filing: 07.12.2001
(51) Int. Cl.: C22C 1/03

(54) **GRAIN REFINING AGENT FOR CAST ALUMINUM OR MAGNESIUM PRODUCTS**
KORNFEINUNGSMITTEL FÜR ALUMINIUM- ODER MAGNESIUM-GUSSPRODUKTE
AGENT D'AFFINAGE STRUCTURAL POUR PRODUITS MOULES D'ALUMINIUM OU DE MAGNESIUM

(30) Priority: 08.12.2000 CA 2327950
(43) Date of publication of application: 15.10.2003
(73) Proprietor: Groupe Minutia Inc., Boucherville, Québec J4B 6Y4 (CA)
(72) Inventor: BOILY, Sabin, Chambly, Québec J3L 5M6 (CA); BLOUIN, Marco, Montreal, Québec H1X 2N6 (CA)
(74) Representative: Casalonga, Axel
(86) International application number: PCT/CA2001/001763
(87) International publication number: WO 2002/046484

(56) References cited:
- EP-A- 0 521 580
- EP-A- 0 751 228
- WO-A-99/61671
- DE-A- 4 327 227
- FR-A- 2 266 746
- US-A- 3 961 995
- US-A- 6 132 532
- PATENT ABSTRACTS OF JAPAN vol. 1998, no. 10, 31 August 1998 (1998-08-31) -& JP 10 140259 A (CHO TAKAO), 26 May 1998 (1998-05-26)

## Description

### Field of the Invention

The present invention pertains to improvements in the field of cast metals and metal alloys. More particularly, the invention relates to a grain refining agent for cast aluminum or magnesium products.

### Background Art

Grain refiners are widely used to reduce the grain size and to control the microstructure of cast metals and alloys. Adding grain refiners to molten metal or alloy during casting enhances the heterogeneous solidification and results in a fine-structured material with equiaxed grains. The resulting material shows improved mechanical properties such as high yield strength and toughness.

In the aluminum industry, different grain refiners are generally incorporated in the aluminum as master alloys which are added to the aluminum melt in solid form, for example, in the form of small ingots or a wire which is continuously fed into the melt. The master alloy can also be added in a molten state. The same applies to the magnesium industry.

Typical master alloys for use in aluminum or magnesium casting comprise from 1 to 10% titanium and from 0.1 to 5% boron or carbon, the balance consisting essentially of aluminum or magnesium, with particles of TiB₂ or TiC being dispersed throughout the matrix of aluminum or magnesium. Master alloys containing titanium and boron or carbon are normally produced by dissolving the required quantities of titanium and boron or carbon in an aluminum or magnesium melt at temperatures in excess of 900°C in the case of aluminum, and in excess of 800°C in the case of magnesium.

The document EP-A-0 521 580 discloses that grain refiners such as TiB₂ may be used as powder.

The production of master alloys is expensive since high operating temperatures are required.

### Disclosure of the Invention

It is therefore an object of the present invention to overcome the above drawback and to provide a grain refining agent for cast aluminum or magnesium products, which does not require to be formed into a master alloy prior to being added to the molten aluminum or magnesium to be cast.

According to one aspect of the invention, there is provided a grain refining agent for cast aluminum or magnesium products, comprising particles having an average particle size of 0.1 to 30 µm and each formed of an agglomerate of grains with each grain comprising a nanocrystal of a transition metal boride or carbide of the formula:

MeₐX_{b} (I)

wherein Me is a transition metal, X is boron or carbon, a ranges from 1 to 10 and b ranges from 1 to 20.

The term "nanocrystal" as used herein refers to a crystal having a size of 100 nanometers or less.

The expression "cast aluminum product" as used herein refers to a cast product comprising aluminum or an alloy thereof. Similarly, the expression "cast magnesium product" as used herein refers to a cast product comprising magnesium or an alloy thereof.

The present invention also provides, in another aspect thereof, a method of preparing a grain refining agent as defined above. The method of the invention comprises the steps of:
a) providing a first reagent selected from the group consisting of transition metals and transition metal-containing compounds;
b) providing a second reagent selected from the group consisting of boron, boron-containing compounds, carbon and carbon-containing compounds; and
c) subjecting the first and second reagents to high-energy ball milling to cause solid state reaction therebetween and formation of particles having an average particle size of 0.1 to 30 µm, each particle being formed of an agglomerate of grains with each grain comprising a nanocrystal of a transition metal boride or carbide of formula (I) defined above.

The expression "high-energy ball milling" as used herein refers to a ball milling process capable of forming the aforesaid particles comprising nanocrystalline grains of the transition metal boride or carbide of formula (I), within a period of time of about 40 hours.

### Description of Drawing

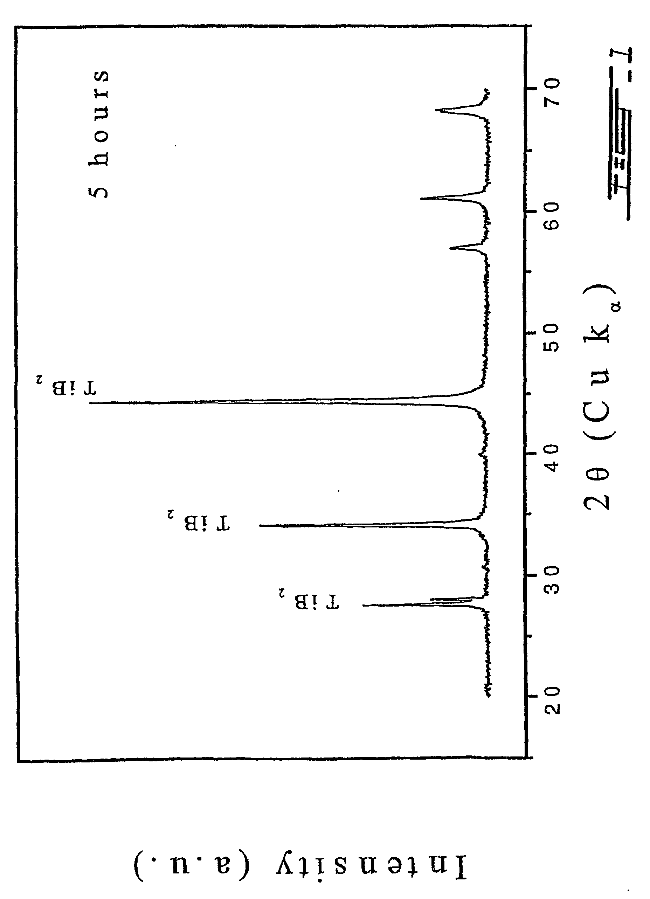

In the accompanying drawing, the sole figure shows the X-ray diffraction of the grain refining agent obtained in Example 1.

### Modes for Carrying out the Invention

Typical examples of compounds of the formula (I) include TiB₂, Ti₃B, Ti₅B and TiC. TiB₂ and TiC are preferred.

Examples of suitable transition metals which may be used as the aforesaid first reagent include titanium and vanadium. Titanium is preferred. It is also possible to use a titanium-containing compound such as TiH₂, TiAl₃ and TiB.

Examples of suitable boron-containing compounds which may be used as the aforesaid second reagent include AlB₂ and AlB₁₂. It is also possible to use tetraboron carbide (B₄C) as either a boron-containing compound or a carbon-containing compound.

According to a preferred embodiment, step (c) is carried out in a vibratory ball mill operated at a frequency of 8 to 25 Hz, preferably about 17 Hz. It is also possible to conduct step (c) in a rotary ball mill operated at a speed of 150 to 1500 r.p.m., preferably about 1000 r.p.m.

According to another preferred embodiment, step (c) is carried out under an inert gas atmosphere such as a gas atmosphere comprising argon or nitrogen, or under a reactive gas atmosphere such as a gas atmosphere comprising hydrogen, ammonia or a hydrocarbon, in order to saturate dangling bonds and thereby prevent oxidation of the grain refining agent. An atmosphere of argon, nitrogen or hydrogen is preferred. It is also possible to coat the particles with a protective film or to admix a sacrificial element such as Mg or Ca with the reagents.

In the particular case of TiB₂ or TiC wherein titanium and boron or carbon are present in stoichiometric quantities, these two compounds can be used as starting material. Thus, they can be directly subjected to high-energy ball milling to cause formation of particles having an average particle size of 0.1 to 30 µm, each particle being formed of an agglomerate of grains with each grain comprising a nanocrystal of TiB₂ or TiC.

The high-energy ball milling described above enables one to obtain grain refining agents having either non-stoichiometric or stoichiometric compositions.

Since the grain refining agent according to the invention is in powder form, it may be difficult to handle. Consolidation is thus preferred to facilitate manipulations and also to ensure that the grain refining agent is homogeneously dispersed in the aluminum or magnesium melt to be cast. For example, the powder can be compacted to form pellets or bricks by uniaxial pressing, hot or cold isostatic pressing, with or without a suitable binder. The powder can also be formed into a cored wire by wrapping the powder with a suitable foil which is preferably made of the same metal or alloy to be cast or of an element having a melting point lower than that of the metal or alloy to be cast.

The following non-limiting examples illustrate the invention.

### EXAMPLE 1.

A grain refining agent was prepared by ball milling 3.45g of titanium and 1.55g of boron in a hardened steel crucible with a ball-to-powder mass ratio of 4.5:1 using a SPEX 8000 (trademark) vibratory ball mill operated at a frequency of about 17 Hz. The operation was performed under a controlled argon atmosphere to prevent oxidization. The crucible was closed and sealed with a rubber O-ring. After 5 hours of high-energy ball milling, a TiB₂ structure was formed, as shown on the X-ray diffraction pattern in the accompanying drawing. The structure of TiB₂ is hexagonal with the space group P6/mmm (191). The particle size varied between 1 and 5 µm and the crystallite size, measured by X-ray diffraction, was about 30 nm.

### EXAMPLE 2.

A grain refining agent was prepared according to the same procedure as described in Example 1 and under the same operating conditions, with the exception that the ball milling was carried out for 20 hours instead of 5 hours. The resulting powder was similar to that obtained in Example 1. The crystallite size, however, was lower (about 16 nm).

### EXAMPLE 3.

A grain refining agent was prepared according to the same procedure as described in Example 1 and under the same operating conditions, with the exception that 3.5g of titanium hydride and 1.5g of boron were milled. The grain refining agent obtained comprised a mixture of TiB₂ and TiH₂.

### EXAMPLE 4.

A grain refining agent was prepared according to the same procedure as described in Example 1 and under the same operating conditions, with the exception that 3.1g of titanium, 0.35g of titanium hydride and 1.55g of boron were milled. The grain refining agent obtained comprised a mixture of TiB₂ and TiH₂.

### EXAMPLE 5.

A grain refining agent was prepared according to the same procedure as described in Example 1 and under the same operating conditions, with the exception that titanium, boron and graphite were milled. The main role of graphite is lubrication during milling; however, it may also act as a nucleating germ for titanium carbide or a protecting agent against oxidation. The grain refining agent obtained comprised a mixture of TiB₂ and TiC.

### EXAMPLE 6.

A grain refining agent was prepared according to the same procedure as described in Example 1 and under the same operating conditions, with the exception that titanium and graphite were milled. The grain refining agent obtained comprised TiC.

### EXAMPLE 7.

A grain refining agent was prepared according to the same procedure as described in Example 1 and under the same operating conditions, with the exception that titanium hydride and graphite were milled. The grain refining agent obtained comprised a mixture of TiC and TiH₂.

### EXAMPLE 8.

A grain refining agent was prepared by ball milling titanium diboride under the same operating conditions as in Example 1, with the exception that the ball milling was carried out for 20 hours instead of 5 hours. The starting structure was maintained, but the crystallite size decreased to 15 nm.

## Claims

1. A grain refining agent for cast aluminum or magnesium products, comprising particles having an average particle size of 0.1 to 30 µm and each formed of an agglomerate of grains with each grain comprising a nanocrystal of a transition metal boride or carbide of the formula:
MeₐX_{b} (I)
wherein Me is a transition metal, X is boron or carbon, a ranges from 1 to 10 and b ranges from 1 to 20.

2. A grain refining agent according to claim 1, wherein Me is a transition metal selected from the group consisting of titanium and vanadium.

3. A grain refining agent according to claim 2, wherein Me is titanium.

4. A grain refining agent according to claim 3, wherein X is boron.

5. A grain refining agent according to claim 4, wherein a is 1 and b is 2.

6. A grain refining agent according to claim 3, wherein X is carbon.

7. A grain refining agent according to claim 6, wherein a is 1 and b is 1.

8. A grain refining agent according to claim 1, wherein said average particle size ranges from 1 to 5 µm.

9. A method of preparing a grain refining agent as defined in claim 1, comprising the steps of:
a) providing a first reagent selected from the group consisting of transition metals and transition metal-containing compounds;
b) providing a second reagent selected from the group consisting of boron, boron-containing compounds, carbon and carbon-containing compounds; and
c) subjecting said first and second reagents to high-energy ball milling to cause solid state reaction therebetween and formation of particles having an average particle size of 0.1 to 30 µm, each particle being formed of an agglomerate of grains with each grain comprising a nanocrystal of a transition metal boride or carbide of the formula (I) as defined in claim 1.

10. A method according to claim 9, wherein step (c) is carried out in a vibratory ball mill operated at a frequency of 8 to 25 Hz.

11. A method according to claim 10, wherein said vibratory ball mill is operated at a frequency of about 17 Hz.

12. A method according to claim 9, wherein step (c) is carried out in a rotary ball mill operated at a speed of 150 to 1500 r.p.m.

13. A method according to claim 12, wherein said rotary ball mill is operated at a speed of about 1000 r.p.m.

14. A method according to claim 9, wherein step (c) is carried out under an inert gas atmosphere.

15. A method according to claim 9, wherein step (c) is carried out for a period of time of about 5 hours.

16. A method of preparing a grain refining agent as defined in claim 5 or 7, comprising subjecting TiB₂ or TiC to high-energy ball milling to cause formation of particles having an average particle size of 0.1 to 30 µm, each particle being formed of an agglomerate of grains with each grain comprising a nanocrystal of TiB₂ or TiC.

17. A method according to claim 16, wherein said high-energy ball milling is carried out in a vibratory ball mill operated at a frequency of 8 to 25 Hz.

18. A method according to claim 16, wherein said high-energy ball milling is carried out in a rotary ball mill operated at a speed of 150 to 1500 r.p.m.

19. A method according to claim 16, wherein said high-energy ball milling is carried out under an inert gas atmosphere.

20. A method according to claim 16, wherein said high-energy ball milling is carried out under a reactive gas atmosphere.

21. A method according to claim 20, wherein said reactive gas atmosphere comprises hydrogen, ammonia or a hydrocarbon.

22. A method according to claim 16, wherein said high-energy ball milling is carried out for a period of time of about 20 hours.

## Patentansprüche

1. Kornfeinungsmittel für Aluminium- oder Magnesium-Gussprodukte, umfassend Teilchen mit einer Durchschnittsteilchengröße von 0,1 bis 30 µm und jedes gebildet aus einem Agglomerat von Körnern, wobei jedes Korn einen Nanokristall eines Übergangsmetallborids oder -karbids der Formel:
MeₐX_{b} (I)
umfaßt, worin Me ein Übergangsmetall ist, X = Bor oder Kohlenstoff ist, a von 1 bis 10 reicht und b von 1 bis 20 reicht.

2. Kornfeinungsmittel nach Anspruch 1, in welchem Me ein Übergangsmetall ist, ausgewählt aus der aus Titan und Vanadium bestehenden Gruppe.

3. Kornfeinungsmittel nach Anspruch 2, in welchem Me Titan ist.

4. Kornfeinungsmittel nach Anspruch 3, in welchem X = Bor ist.

5. Kornfeinungsmittel nach Anspruch 4, in welchem a = 1 ist und b = 2 ist.

6. Kornfeinungsmittel nach Anspruch 3, in welchem X Kohlenstoff ist.

7. Kornfeinungsmittel nach Anspruch 6, in welchem a = 1 ist und b = 1 ist.

8. Kornfeinungsmittel nach Anspruch 1, in welchem diese Durchschnittsteilchengröße von 1 bis 5 µm reicht.

9. Verfahren zur Herstellung eines Kornfeinungsmittels wie in Anspruch 1 definiert, umfassend die Stufen von:
a) Bereitstellen eines ersten Reaktionsteilnehmers, ausgewählt aus der Gruppe, die aus Übergangsmetallen und Übergangsmetall enthaltenden Verbindungen besteht;
b) Bereitstellen eines zweiten Reaktionsteilnehmers, ausgewählt aus der Gruppe, die aus Bor, Bor enthaltenden Verbindungen, Kohlenstoff und Kohlenstoff enthaltenden Verbindungen besteht; und
c) Unterziehen dieses ersten und dieses zweiten Reaktionsteilnehmers Hochenergie-Kugelmahlen zum Bewirken von Festkörperreaktion zwischen ihnen und Bildung von Teilchen mit einer Durchschnittsteilchengröße von 0,1 bis 30 µm, wobei jedes Teilchen aus einem Agglomerat von Körnern gebildet ist, wobei jedes Korn einen Nanokristall eines Übergangsmetallborids oder -karbids der Formel (I), wie in Anspruch 1 definiert, umfaßt.

10. Verfahren nach Anspruch 9, bei welchem Stufe (c) in einer Vibrationskugelmühle, die bei einer Frequenz von 8 bis 25 Hz betrieben wird, durchgeführt wird.

11. Verfahren nach Anspruch 10, bei welchem diese Vibrationskugelmühle bei einer Frequenz von 17 Hz betrieben wird.

12. Verfahren nach Anspruch 9, bei welchem Stufe (c) in einer Rotationskugelmühle, die bei einer Geschwindigkeit von 150 bis 1.500 Upm betrieben wird, durchgeführt wird.

13. Verfahren nach Anspruch 12, bei welchem diese Rotationskugelmühle bei einer Geschwindigkeit von etwa 1.000 Upm betrieben wird.

14. Verfahren nach Anspruch 9, bei welchem Stufe (c) unter einer Inertgasatmosphäre durchgeführt wird.

15. Verfahren nach Anspruch 9, bei welchem Stufe (c) für eine Zeitdauer von etwa 5 Stunden durchgeführt wird.

16. Verfahren zur Herstellung eines Kornfeinungsmittels wie in Anspruch 5 oder 7 definiert, umfassend Unterziehen von TiB₂ oder TiC dem Hochenergie-Kugelmahlen zum Bewirken der Bildung von Teilchen mit einer Durchschnittsteilchengröße von 0,1 bis 30 µm, wobei jedes Teilchen aus einem Agglomerat von Körnern gebildet ist, wobei jedes Korn einen Nanokristall von TiB₂ oder TiC umfaßt.

17. Verfahren nach Anspruch 16, bei welchem dieses Hochenergie-Kugelmahlen in einer Vibrationskugelmühle, die bei einer Frequenz von 8 bis 25 Hz betrieben wird, durchgeführt wird.

18. Verfahren nach Anspruch 16, bei welchem dieses Hochenergie-Kugelmahlen in einer Rotationskugelmühle, die bei einer Geschwindigkeit von 150 bis 1.500 Upm betrieben wird, durchgeführt wird.

19. Verfahren nach Anspruch 16, bei welchem dieses Hochenergiekugelmahlen unter einer Inertgasatmosphäre durchgeführt wird.

20. Verfahren nach Anspruch 16, bei welchem dieses Hochenergiekugelmahlen unter einer Atmosphäre eines reaktiven Gases durchgeführt wird.

21. Verfahren nach Anspruch 20, bei welchem diese Atmosphäre des reaktiven Gases Wasserstoff, Ammoniak oder einen Kohlenwasserstoff umfaßt.

22. Verfahren nach Anspruch 16, bei welchem dieses Hochenergie-Kugelmahlen für eine Zeitdauer von etwa 20 Stunden durchgeführt wird.

## Revendications

1. Agent d'affinage du grain pour produits en magnésium ou en aluminium coulé, comprenant des particules ayant une taille de particule moyenne de 0,1 à 30 µm et formées chacune d'un agglomérat de grains où chaque grain comprend un nanocristal d'un borure ou d'un carbure de métal de transition de formule :
MeₐX_{b} (I)
où Me est un métal de transition, X est le bore ou le carbone, a est compris dans l'intervalle de 1 à 10 et b est compris dans l'intervalle de 1 à 20.

2. Agent d'affinage du grain selon la revendication 1, dans lequel Me est un métal de transition choisi dans l'ensemble comprenant le titane et le vanadium.

3. Agent d'affinage du grain selon la revendication 2, dans lequel Me est le titane.

4. Agent d'affinage du grain selon la revendication 3, dans lequel X est le bore.

5. Agent d'affinage du grain selon la revendication 4, dans lequel a vaut 1 et b vaut 2.

6. Agent d'affinage du grain selon la revendication 3, dans lequel X est le carbone.

7. Agent d'affinage du grain selon la revendication 6, dans lequel a vaut 1 et b vaut 1.

8. Agent d'affinage du grain selon la revendication 1, dans lequel ladite taille de particule moyenne est comprise entre 1 à 5 µm.

9. Procédé de préparation d'un agent d'affinage du grain conforme à la revendication 1, comprenant les étapes consistant à :
a) prendre un premier réactif choisi dans l'ensemble comprenant les métaux de transition et les composés contenant des métaux de transition ;
b) prendre un deuxième réactif choisi dans l'ensemble comprenant le bore, les composés contenant du bore, le carbone et les composés contenant du carbone ; et
c) soumettre lesdits premier et deuxième réactifs à un broyage à boulets à haute énergie pour provoquer une réaction à l'état solide entre eux et la formation de particules ayant une taille de particule moyenne de 0,1 à 30 µm, chaque particule étant formée d'un agglomérat de grains où chaque grain comprend un nanocristal d'un borure ou d'un carbure de métal de transition selon la formule (I) définie dans la revendication 1.

10. Procédé selon la revendication 9, dans lequel l'étape (c) est exécutée dans un broyeur à boulets vibratoire fonctionnant à une fréquence comprise entre 8 et 25 Hz.

11. Procédé selon la revendication 10, dans lequel on fait fonctionner ledit broyeur à boulets vibratoire à une fréquence d'environ 17 Hz.

12. Procédé selon la revendication 9, dans lequel l'étape (c) est exécutée dans un broyeur à boulets rotatif fonctionnant à une vitesse comprise entre 150 et 1 500 tr/min.

13. Procédé selon la revendication 12, dans lequel on fait fonctionner ledit broyeur à boulets rotatif à une vitesse d'environ 1 000 tr/min.

14. Procédé selon la revendication 9, dans lequel l'étape (c) est exécutée dans une atmosphère de gaz inerte.

15. Procédé selon la revendication 9, dans lequel l'étape (c) est exécutée pendant un intervalle de temps d'environ 5 heures.

16. Procédé de préparation d'un agent d'affinage du grain conforme à la revendication 5 ou 7, comprenant le fait de soumettre du TiB₂ ou du TiC à un broyage à boulets à haute énergie pour provoquer la formation de particules ayant une taille de particule moyenne de 0,1 à 30 µm, chaque particule étant formée d'un agglomérat de grains où chaque grain comprend un nanocristal de TiB₂ ou de TiC.

17. Procédé selon la revendication 16, dans lequel ledit broyage à boulets à haute énergie est exécuté dans un broyeur à boulets vibratoire fonctionnant à une fréquence comprise entre 8 et 25 Hz.

18. Procédé selon la revendication 16, dans lequel ledit broyage à boulets à haute énergie est exécuté dans un broyeur à boulets rotatif fonctionnant à une vitesse comprise entre 150 et 1 500 tr/min.

19. Procédé selon la revendication 16, dans lequel ledit broyage à boulets à haute énergie est exécuté dans une atmosphère de gaz inerte.

20. Procédé selon la revendication 16, dans lequel ledit broyage à boulets à haute énergie est exécuté dans une atmosphère de gaz réactif.

21. Procédé selon la revendication 20, dans lequel ladite atmosphère de gaz réactif comprend de l'hydrogène, de l'ammoniac ou un hydrocarbure.

22. Procédé selon la revendication 16, dans lequel ledit broyage à boulets à haute énergie est exécuté pendant un intervalle de temps d'environ 20 heures.
